(19) Europäisches Patentamt
European Patent Office
Office européen des brevets

(11) Publication number: **0 009 382**
**A1**

(12) # EUROPEAN PATENT APPLICATION

(21) Application number: 79301900.1

(22) Date of filing: 14.09.79

(51) Int. Cl.[3]: **C 01 B 6/21**, C 01 C 3/11

(30) Priority: 18.09.78 US 943015

(43) Date of publication of application: 02.04.80 Bulletin 80/7

(84) Designated Contracting States: BE DE FR GB IT

(71) Applicant: THIOKOL CORPORATION, P.O. Box 1000, Newtown Pennsylvania 18940 (US)

(72) Inventor: Wade, Robert C., 61 S. Village Green, Ipswich Massachusetts 01938 (US)
Inventor: Hui, Benjamin C., 25 Castle Circle, Peabody Massachusetts 01960 (US)

(74) Representative: Hose, Cyril Gustav Bidwell et al, Baron & Warren 16 Kensington Square, London W8 5HL (GB)

(54) **Production of cyanoborohydrides.**

(57) A process for the preparation of compounds of the general formula $RBH_3CN$ wherein R is an alkali metal, a quaternary ammonium group or a phosphonium group wherein a compound of the formula RCN is treated with a stoichiometric amount or slightly less than a stoichiometric amount of a $BH_3$ donor is described. The final products are useful as hydrolysis stable reductants and as synthetic intermediates.

EP 0 009 382 A1



BAD ORIGINAL

# PRODUCTION OF CYANOBOROHYDRIDES

This invention relates to borohydrides and more specifically to a process for the preparation of cyanoborohydrides.

The preparation of lithium, sodium and quaternary ammonium cyanoborohydrides by the reaction of anhydrous HCN with the appropriate borohydride salt is disclosed in U.S. Patent No. 3,667,923. The preparation of potassium cyanoborohydride in analogous fashion is disclosed in U.S. Patent No. 3,697,232. A detailed study of sodium cyanoborohydride preparation is given in Inorganic Chemistry, volume 9, page 2146 (1970).

The present invention provides a synthetic route for the preparation of cyanoborohydrides in good yield, and of high purity and having improved storage stability while avoiding the presence of HCN either as a reactant or as a by-product of reaction.

The invention provides a process for the preparation of a cyanoborohydride of the general formula:

$$RBH_3CN$$

wherein R is an alkali metal, a quaternary ammonium group, or a phosphonium group, characterised in that a compound of the general formula:

$$RCN$$

wherein R is as defined above is treated with a $BH_3$ donor.

The compounds obtained by this process are known to be reducing agents for organic and inorganic compounds and of being, in aqueous solution, relatively more resistant to protonolysis than the corresponding compounds $RBH_4$ wherein R is as defined above and particularly at pH values below neutral. The products of this process are also more storage stable than the products produced by U.S. Patent No. 3,667,933. They are also intermediates in the synthesis of known compounds having therapeutic utility in warm blooded animals.

Of particular interest, is that embodiment of the process wherein the $BH_3$ donor is $BH_3$.tetrahydrofuran. The $BH_3$.tetrahydrofuran may be produced by a process which comprises treating a compound of the formula $RBH_4$ wherein R is as defined above with the molecular complex $BF_3$.tetrahydrofuran. One embodiment of the process of the invention is the complete reaction sequence from the boron trifluoride.tetrahydrofuran molecular complex, treatment of the $BF_3$.tetrahydrofuran in which treatment of the cyanide compound is performed without separation of the $BH_3$.tetrahydrofuran complex from the by-products of its preparation. Alternatively, the $BH_3$.tetrahydrofuran complex may be separated from the by-products of its preparation prior to treatment with the cyanide compound.

The manner of practising the process of the invention will now be described with reference to the preparation of a specific embodiment thereof, namely, sodium cyanoborohydride ($NaBH_3CN$). To prepare sodium cyanoborohydride, sodium cyanide may be suspended in tetrahydrofuran and a ______________________________

solution of $BH_3$ in tetrahydrofuran may be added, while stirring, at as rapid a rate as can conveniently be accommodated by the apparatus. On a laboratory scale, a rate of addition of 1 liter of $BH_3$ solution per hour is convenient. The temperature of the mixture during the addition is not particularly critical and may range from -10°C to about 60°C, normal room temperature or slightly above, 20°C to about 30°C, is preferred. The stoichiometry of the reaction is of course 1 mole of $BH_3$ to 1 mole of sodium cyanide, and it is preferred that the reaction be conducted with about a 5% excess of cyanide. After addition of the $BH_3$ solution is complete, the reaction may be stirred at about room temperature for up to about 5 additional hours. One skilled in the art will recognize that to insure the presence of only cyanoborohydride and the absence of iso adducts or higher homologues, a period of heating at temperatures of over 60°C will be desirable. Heating at reflux for from one-half hour to 10 hours or longer, preferably about 7 hours, is convenient. Recovery of the product from the cooled reaction mixture after reflux may be by conventional techniques. Removal of undissolved material by filtration followed by evaporation of the filtrate is a convenient method. The reagents entering into the reaction should, naturally, be substantially anhydrous. Sodium cyanide is, of course, an article of commerce. Borane ($BH_3$) in tetrahydrofuran is commercially available. It may be prepared from boron trifluoride in diethylether by first replacing the diethyl ether with tetrahydrofuran by conventional techniques, adding the $BF_3$·diethyl ether to tetrahydrofuran and evaporating the diethyl ether is convenient, and then treating the $BF_3$·tetrahydrofuran solution with sodium borohydride.

The $BH_3$·tetrahydrofuran molecular complex so produced may either be purified by filtration and stabilized by the addition of a small quantity of sodium borohydride, or the treatment with sodium cyanide may be performed directly without

BAD ORIGINAL

separation of the by-products of generation of the $BH_3$.

The use of the products prepared by the process of the invention are well-known in the literature.

Selectivity with sodium cyanoborohydride in the reduction of oximes, aldehydes and ketones and use in the selective introduction of deuterium is described by Borch et al in the Journal of the American Chemical Society, Vol. 93, page 2897(1971). Similar use of lithium cyanoborohydride is reported by Borch in the Journal of the American Chemical Society, Vol. 91, page 3396(1969). U. S. Patent No. 3,647,890 is concerned with the use of lithium, sodium, potassium or quaternary ammonium cyanoborohydrides as reducing agents for ketones. Hutchins et al describe the reduction of alkyl iodides, bromides and tosylates with sodium cyanoborohydride in hexamethylphosphoramide in Chemical Communications (1971) page 1907. Kreevoy and Johnston describe the reduction of triphenylcarbinol to triphenylmethane in Croatica Chemica Acta, Vol. 45, page 511 (1973). The formation of nitrogen base donor cyano-borane addition compounds is described by Uppal and Kelly in Chemical Communications (1970) page 1619. The selective deoxygenation of aldehydes and ketones including hindered systems is described by Hutchins et al in the Journal of the American Chemical Society, Vol. 95, page 3662 (1973). The reduction of mono- and di-keto saturated steroids is described by Boutigue et al in C. R. Acad. Sc. Paris, t.276, Serie C, page 437 (1973) and the reduction of conjugated steroidal ketones is described by Boutigue et al in Bulletin de la Société Chemique de France (1973) page 3062. The selective reduction of aliphatic ketones and aldehydes to hydrocarbons with sodium cyanoborohydride and p-toluene-sulfonyl hydrazide in dimethylformamide-sulfolane is described in Journal of the American Chemical Society, Vol. 93, page 1793 (1971). The selective reduction of primary iodides and, to a lesser extent, bromides to primary hydrocarbons with tetrabutylammonium cyanoborohydride in

BAD ORIGINAL

hexamethylphosphoramide is described in the Journal of the American Chemical Society, Vol. 95, page 6131 (1973). The reductive deoxgenation of α,β-unsaturated p-tosylhydrazones with sodium cyanoborohydride is discussed by Hutchins et al in the Journal of Organic Chemistry, Vol. 40, page 923 (1975) and by Taylor and Djerassi in the Journal of the American Chemical Society, Vol. 98, page 2275 (1976). Selective reductions of α,β-unsaturated esters, nitriles and nitro compounds with sodium cyanoborohydride are described by Hutchins et al in the Journal of Organic Chemistry, Vol. 41, page 3328 (1976). Hutchins and Kandasamy describe the reduction of conjugated aldehydes and ketones in acidic methanol and hexamethylphosphortriamide in the Journal of Organic Chemistry, Vol. 40, page 2530 (1975). The selective reduction of sugar iodides and tosylates with sodium cyanoborohydride is described by Kuzuhara et al in Carbohydrate Research (1975) Vol. 43 (2), page 293. Spielvogel and Bratton describe the preparation of macrocyclic cyanoboranes from sodium cyanoborohydride in the Journal of the American Chemical Society, Vol. 94, page 8597 (1972). Cure of sulfide containing polymers with lithium cyanoborohydride is described in U. S. Patent 3,265,671. U. S. Patent 3,637,516 describes bleaching liquor for ground wood pulp containing alkali metal cyanoborohydride as the reducing agent. Cyanotrihydroborate complexes of transition metals are described by Lippard and Welcker in Chemical Communications (1970) page 515 and Inorganic Chemistry, Vol. 11, page 6 (1972). Cationic ruthenium ammine complexes of cyanotrihydroborate are described by Ford in Chemical Communications (1971) page 7. Cyanotrihydroborato complexes of rhodium and iridium are described by Vaska et al in Chemical Communications (1971) page 1615. Photosensitive copper complexes suitable for image formation incorporating cyanotrihydroborate ion are described in U. S. Patent 3,989,732. Chemical plating baths containing alkali metal cyanoborohydride are described in

BAD ORIGINAL

U. S. Patent 3,637,472. An electroless gold plating bath containing alkali metal cyanoborohydride is described in U. S. Patent 3,697,296. Use of cyanoborohydride anion to chemically fog a silver halide photographic emulsion is described in U. S. Patent 3,951,656. The use of cyanoborohydride anion in the direct coupling of oligosaccharides to proteins and derivatized gels is described by Gray in Archives of Biochemistry and Biophysics, Vol. 163, page 426 (1974). Use of cyanoborohydride salts to reduce imminium compounds to amines is described in U. S. Patent No. 3,873,621. Mild reduction of N, N'-mercuriobistosylhydrazones with sodium cyanoborohydride, synthesis of N-arylmethyl-N'-tosylhydrazines and deoxygenation of aromatic ketones is described by Rosini et al in Synthesis (1976) page 530. Selective reductions with sodium cyanoborohydride in the course of determination of the stereochemistry of octopine and its isomers and their enzymic properties are described by Biellmann et al in Bioorganic Chemistry (1977) Vol 6 (1) 89. The use of sodium cyanoborohydride in the synthesis of biradical nitroxides is described by Rauckman et al in Org. Prep. Proced. Int. (1977) Vol. 9 (2) page 53. Amine catalysis of the reduction of ketones by sodium cyanoborohydride is described by Chow in Tung Wu Shu Li Hsueh Pao (1975) page 139. A general synthesis of amine cyanoboranes from sodium cyanoborohydride and the antitumor activity and hypolipidemic activity of $Me_3N-BH_2COOH$ and its N-ethylamide derivative both prepared from $Me_3N-BH_2CN$ are described in Inorganic Chemistry, Vol. 17, page 2327 (1978). The use of sodium cyanoborohydride in the N-methylation of amides and related compounds by reduction of methylols is described by Basha et al in Synthetic Communications, Vol. 7, page 549 (1977).

$BH_3$·tetrahydrofuran molecular complex or $BH_3$diethyl ether molecular complex may also be prepared by passing gaseous diborane into the desired solvent and stabilizing the resulting solution with a small quantity of sodium borohydride.

BAD ORIGINAL

One skilled in the art will recognize that in place of the sodium cyanide illustrated, one may substitute other cyanide salts of alkali metals such as lithium, potassium, rubidium or cesium or of quaternary ammonium ions, which are either commercially available, obtainable by neutralization of HCN, preferably in aqueous solution, with a stoichiometric amount of the appropriate base followed by freeze drying of the solution of the salt, or by conventional ion exchange techniques, to prepare the other cyanoborohydrides contemplated as obtainable through the processes of the invention. The term quaternary ammonium radical contemplates a tetra substituted nitrogen atom of the general formula

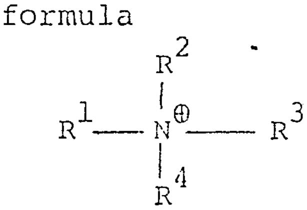

wherein $R^1$, $R^2$, $R^3$, and $R^4$ are independently lower alkyl of 1 to about 20 carbon atoms, alkenyl of about 3 to about 20 carbon atoms, cycloalkyl of 3 to about 6 carbon atoms, mono carbocyclic aryl of about 6 carbon atoms, mono carbocyclic aryl alkyl of from 7 to about 11 carbon atoms, halo, amino, carboxy, alkoxy carbonyl, nitrile, or hydroxyl alkyl of from 1 to about 6 carbon atoms, alkoxy alkyl of 2 to 22 carbon atoms, or mono carbocyclic aryl hydroxy alkyl of from 7 to about 15 carbon atoms, or when taken together with the nitrogen atom to which they are attached, any two of $R^1$, $R^2$, $R^3$ or $R^4$ may be concatenated to form a 5 or 6 membered heterocyclic ring containing carbon, hydrogen, oxygen or nitrogen, said heterocyclic rings and said monocarbocyclic aryl groups being unsubstituted or halo, hydroxy, amino, or mono or dialkyl substituted, said alkyl groups being straight, branched chain or cyclic and containing 1 to 6 carbon atoms.

Illustrative of these are quaternary ammonium ions such as tetramethyl, tetraethyl, tetrapropyl, tetra-isopropyl,

BAD ORIGINAL

tetra-*n*-butyl, tetra-*i*-butyl, t-butyl trimethyl, phenyl trimethyl, benzyl trimethyl, cyclohexyl-triethyl, allyl trimethyl, 2-chloroethyl-trimethyl, 2-hydroxy-butyl trimethyl, tri-(2-hydroxy ethyl) methyl, 2-ethoxy-propyl trimethyl, α-amino-p-tolyl trimethyl, 3-cyanopropyl trimethyl, 2-carboxy-ethyl trimethyl, amyl dimethyl phenyl, cetyl trimethyl, tricapryl methyl, piperidinium dimethyl, morpholinium diethyl, pyrrolidinium dimethyl, piperazinium cyclohexyl methyl, 1-methyl-piperidinum dimethyl, 4-ethyl-morpholinium dipropyl, 1-isopropyl-pyrrolidinium dimethyl, 1,4-dimethyl-piperazinium-diethyl, 1-*n*-butylpiperidinium-di-methyl, 2-methyl-piperidinium di-ethyl, 1-ethyl-2-methyl-piperidinium dipropyl-, tetraethanol, diethyl-diethanol, tri-*n*-butyl mono-ethanol, tris(hydroxy-methyl) methyl, phenyl-di-methyl mono-ethanol, and the like.

One skilled in the art will also recognize that, although the process of the invention have been illustrated through use of tetrahydrofuran as a preferred solvent, any inert solvent in which the reactants and products have reasonable solubility, as well as mixtures thereof, may be employed as equivalents. Typical examples of these solvents are ethers containing from about 4 to about 10 carbon atoms, such as, diethyl ether, the dimethyl ethers of ethylene glycol, diethylene glycol, triethylene glycol and the like, as well as dimethyl formamide and dimethyl sulfide. It will similarly be obvious that mixtures of two or more of these solvents may be employed.

One skilled in the art will recognize that, although the process of the invention has been illustrated by use of a $BH_3$·tetrahydrofuran molecular complex as a $BH_3$ donor, any compound or molecular complex capable of donating $BH_3$ may be employed as an equivalent. Typical examples of these are: diborane, $BH_3$·dimethylsulfide, or $BH_3$ in a molecular complex with the aforementioned ethers containing from 4 to 10 carbon atoms.

BAD ORIGINAL

One skilled in the art will also recognize that $BF_3$-diethyl ether complex may be utilized to prepare $BH_3$.tetrahydrofuran complex without intermediate conversion to a $BF_3$.tetrahydrofuran complex.

In addition to the quaternary ammonium moieties illustrated hereinabove as suitable for use in the practice of the invention, it will be understood that the analogous phosphonium cyanides may be treated in analogous fashion with $BH_3$ donors to prepare the corresponding phosphonium cyanoborohydrides which may be produced by the process of this invention.

The following preparations and examples illustrate the preferred methods of carrying out the process of the invention.

PREPARATION A

Conversion of $BF_3$-Diethyl Ether Complex to $BF_3$. Tetrahydrofuran Complex

Add boron trifluoride-diethyl-etherate (275 ml, 2.18 moles) to tetrahydrofuran (190 ml, 2.35 miles) in a vessel equipped for suction and stirring. The mixture is stirred at room temperature under reduced pressure until substantially all diethyl ether is removed. Removal of the diethyl ether may, if desired, be followed by gas chromatography.

PREPARATION B

Borane-Tetrahydrofuran Complex from Boron Trifluoride-Tetrahydrofuran Complex

Sodium borohydride (62.74g., 1.658 moles) is suspended in tetrahydrofuran (810 ml) under a nitrogen atmosphere and cooled to about 5°C. The boron trifluoride-tetrahydrofuran complex of Preparation A is added slowly with stirring over a period of about 2 hours. Stirring is continued for about 0.5 hour after the addition is complete. Filtration through a pressure filter under nitrogen into a vessel cooled in an ice bath gives the title product (1.7 molar) in tetrahydrofuran solution

(800 ml.). Sodium borohydride (0.7 g., 0.0185 mole) is added to stabilize the solution.

EXAMPLE 1

Sodium Cyanoborohydride

Sodium cyanide (114.9 g., 2.344 moles) is suspended in tetrahydrofuran (200 ml) under a nitrogen atmosphere at about ambient temperature (22°C). The cooled (ice-bath) borane-tetrahydrofuran solution from Preparation B is then added slowly while stirring under nitrogen. Addition requires about one hour and the reaction is stirred for an additional 5 hours at room temperature, then heated at reflux for about 10 hours. After cooling, the reaction mixture is filtered and the filtrate evaporated to dryness *in vacuo* at 60°C to give the title product as a white powder which is further dried in a vacuum oven (1 hour at room temperature, 24 hours at 90°C), 82.0g.

Analysis for $NaBH_3CN$:

Calc: H,4.81%; B,17.20%; CN,41.40%

Found: H,4.45%; B,15.69%; CN,37.43%.

Repetition of the processes of Preparation B and Example 1 results in product yields ranging from 59 to 71% based on the boron trifluoride-tetrahydrofuran complex.

EXAMPLE 2

Preparation of Sodium Cyanoborohydride directly from Boron Trifluoride-Tetrahydrofuran Complex without Isolation of the Intermediate Borane-Tetrahydrofuran Complex

Sodium borohydride (65.70g., 1.737 moles) is suspended in tetrahydrofuran (810 ml) and cooled in an ice bath while under a nitrogen atmosphere. Boron trifluoride-tetrahydrofuran complex (2.18 moles) prepared as in Preparation A is added by a procedure analogous to that of Preparation B. After a post addition stirring period of 1.5 hours, sodium cyanide (112.7 g., 2.299 moles) is added slowly in small batches while continuing cooling. When addition is complete, the reaction mixture is stirred for 5 hours at room temper-

BAD ORIGINAL

ature and then heated at reflux for 10 hours. After cooling and filtration under $N_2$, the filtrate is evaporated and the residue dried as in Example 1 to obtain the title product 116.6g.

Analysis for $NaBH_3CN$

Calc: H, 4.81%; B, 17.20%; CN, 41.40%

Found: H, 4.60%; B, 16.89%; CN, 33.14%

Repetition of this procedure results in yields of from 85 to 88% of theoretical based on boron-trifluoride-tetrahydrofuran complex.

PREPARATION C

Preparation of Boron-Tetrahydrofuran Complex directly from Boron Trifluoride-Diethyl Ether Complex

Following a procedure generally analogous to that of Preparation B, from $NaBH_4$ (79.67g., 2.11 m.), $BF_3$. diethyl ether complex (2.69 m., 340 ml.) and tetrahydrofuran (1000 ml.) is obtained a 1.5 molar solution of borane-tetrahydrofuran complex (900 ml.).

EXAMPLE 3

Preparation of Sodium Cyanoborohydride from the Borane-Tetrahydrofuran Complex of Preparation C

Following a procedure analogous to that of Example 1, there is obtained from the product solution of Preparation C and sodium cyanide (80 g), 85.1 g. of sodium cyanoborohydride.

Analysis for $NaBH_3CN$

Calc: H, 4.81%; B, 17.20%; CN, 41.40%

Found: H, 4.14%; B, 16.05%; CN, 35.38%

EXAMPLE 4

Samples of products prepared by the process of this application, Samples 1 to 5 inclusive, and a sample of sodium cyanoborohydride prepared by the process of U. S. Patent No. 3,697,232, are stored in closed bottles at room temperature ($18^o$-$25^oC$). This latter sample turns black and loses 50% of its active hydride content after 2 to 3 months storage at room temperature. Samples 1 to 5 retain their initial white color and are free flowing.

The initial hydride analysis and that after the storage period indicated for each sample is:

| Sample No. | Initial $H^-$ % | Storage $H^-$ % (time) |
|---|---|---|
| 1 | 4.46 | 4.36 (4 months) |
| 2 | 3.98 | 4.20 (3 months) |
| 3 | 4.47 | 4.47 (3 months) |
| 4 | 4.60 | 4.46 (3 months) |
| 5 | 4.45 | 4.38 (3 months) |

PREPARATION D

Borane Tetrahydrofuran Complex in Tetrahydrofuran from Diborane

Pass diborane gas (2270 g., 82 moles) into dry tetrahydrofuran (164 l.) under argon at a rate of 30-35 cu. ft. per min. After addition is complete, analyze for borane concentration by standard techniques (hydrolysis and titration of boric acid so formed is a convenient method). Add sodium borohydride (0.19 g., 0.005 moles per mole of retained $BH_3$) to stabilize the solution.

EXAMPLE 5

Potassium Cyanoborohydride from Potassium Cyanide and Diborane

Treat a suspension of potassium cyanide (1 mole) in dimethylformamide with diborane (0.5 mole) under conditions analogous to those described in Example 1 to prepare the title product in dimethylformamide solution.

BAD ORIGINAL

CLAIMS

1. A process for the preparation of a cyanoborohydride having the general formula

$RBH_3CN$

wherein R is an alkali metal, a quaternary ammonium group, or a phosphonium group characterised in that

(a) a cyanide compound of the general formula

RCN

wherein R is as defined above is treated with a $BH_3$ donor, said compound RCN and said $BH_3$ donor being present in about equal molar proportions, and

(b) that the product produced by the treatment of step (a) is warmed at a temperature of at least 60°C for a period of at least one-half hour.

2. A process as claimed in claim 1, further characterised in that the $BH_3$ donor is the molecular complex $BH_3$-tetrahydrofuran.

3. A process as claimed in claim 2, further characterised in that the molecular complex $BH_3$.tetrahydrofuran is prepared by treating the molecular complex $BF_3$.diethyl ether with a compound of the formula $RBH_4$ wherein R is as defined in claim 1.

4. A process as claimed in claim 3, further characterised in that the molecular complex $BH_3$.tetrahydrofuran is separated from the by-products of its preparation prior to treatment of said cyanide compound with said complex.

5. A process as claimed in any preceding claim, characterised in that the $BH_3$ donor is diborane, a $BH_3$.dimethylsulphide complex or a $BH_3$.dialkyl ether complex containing 4 to 10 carbon atoms in the dialkyl ether.

6. A process as claimed in any of claims 1, 2, 3, 4 or 5 wherein R is sodium.

7. A process for the production of a cyanoborohydride according to claim 1 and substantially as hereinbefore described with reference to any one of the Examples.

European Patent Office

# EUROPEAN SEARCH REPORT

0009382

Application number

EP 79 301 900.1

## DOCUMENTS CONSIDERED TO BE RELEVANT

| Category | Citation of document with indication, where appropriate, of relevant passages | Relevant to claim |
|---|---|---|
| D | US - A - 3 667 923 (R.C. WADE)<br>-- | |
| D | US - A - 3 697 232 (R.C. WADE)<br>-- | |
| A | Chemical Abstracts vol. 73, no. 16, 19 October 1970<br>Columbus, Ohio, USA<br>R.C. WADE et al. "Synthesis of sodium cyanotrihydroborate and sodium Isocyano-trihydroborate" , page 447, column 1, abstract no. 83350v | |
| D | & Inorg. Chem. vol. 9, no. 9, 1970 pages 2146 to 2150 (Eng)<br>-- | |
| A | DE - B - 2 037 207 (VENTRON CORP.)<br>-- | |
| A | US - A - 3 634 277 (H.C. BROWN)<br>---- | |

**CLASSIFICATION OF THE APPLICATION (Int. Cl.³)**

C 01 B 6/21
C 01 C 3/11

**TECHNICAL FIELDS SEARCHED (Int.Cl.³)**

C 01 B 6/00
C 01 B 35/00
C 01 C 3/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 07-12-1979 | KESTEN |

EPO Form 1503.1 06.78